# EUROPEAN PATENT SPECIFICATION

(11) **EP 3 100 836 B1**
(45) Date of publication and mention of the grant of the patent: **30.10.2019**
(21) Application number: 16165699.6
(22) Date of filing: 17.04.2016
(51) Int. Cl.: B27N 3/02, E04C 2/24, E04C 2/16, B27N 3/04, B27N 3/08

(54) **MANUFACTURING OF A BOARD**
HERSTELLUNG EINES PANEELS
FABRICATION D'UN PLATEAU

(30) Priority: 17.04.2015 FI 20155292
(43) Date of publication of application: 07.12.2016
(73) Proprietor: Suomen Käsityöteollisuuden Oy, 30100 Forssa (FI)
(72) Inventor: Poranen, Taneli, 20100 Turku (FI)
(74) Representative: Genip Oy

(56) References cited:
- FI-B- 122 883
- GB-A- 365 536
- US-A- 4 382 758
- US-A- 5 346 574
- US-A1- 2011 165 375
- US-A1- 2013 273 244

## Description

### Field of invention

The invention is related to building, more generally to building materials and especially to the manufacture and use of building boards.

### Technical background

Building operations employ many different types of building boards, which have been made as fibreboards or composition boards. Known building boards are manufactured for example from wood and gypsum. Especially gypsum board has poor moisture resistance, whereby it loses some of its technical characteristics when it gets moist, and even becomes unusable. US patent 5,346,574 discloses a method for manufacturing laminates. Straight portions of vegetable stalks, each having an epidermis mainly of lignocellulose and a porous core are impregnated with a thermal hardener solution of high-molecularisable liquid compound, resinified liquid, or mixtures thereof, and arranged in parallel to form a layer of a sheet-like material, piling these sheet-like materials and pressing them to make these layers come to contact closely in flat condition. After these vegetable stalks are laminated, the resin compound in the thermal hardener solution is set or harden.

Konto Oy manufactures peat felts for moulded and pressed products, and moulded and pressed products from peat felts. Konto Oy's Finnish patent 122883 presents a method for the manufacture of a moulded and pressed product, and a moulded and pressed product.

In the method described in Konto Oy's patent, support material in fibrous format is used for manufacturing first a thin net-like gauze using the carding technique. Many different textile fibres suited for the purpose, such as various natural fibres, polyester, polypropylene or their mixtures can be used as the support material. A thin layer of filler material in a loose format is dosed over the gauze. The filler material is advantageously peat, ground recycled pulp or some other sufficiently fine-grained natural material suited for the purpose; a mixture consisting of several different materials can also be used as the filler material. The filler material fills the holes in the net-like gauze and forms a thin layer over the gauze. If necessary, adhesive that binds the filler material particles to the gauze can also be added into the filler material. The adhesive, filler material and support material can be biodegradable materials. A thicker structure is formed of the gauze-like support material and filler material by means of folding so that individual gauze parts settle over one another in layers. The layer structure formed in this way makes a mat-like felt by binding the overlapping gauzes and the filler material layers located between them together, for example by means of adhesive arranged in connection with the filler material or by needling the overlapping gauzes to each other.

In the method described in Konto Oy's patent, the felt composed of support material and filler material is turned into a moulded and pressed product by exerting a suitable compression pressure to the felt which is at an elevated temperature. When the support material of the felt is after heat binding still at a molten or softened formable format, in which case the felt can be compressed to a smaller volume, whereby its density increases.

Peat is an organic soil, which contains at least 75% of organic material. The foremost uses of peat are energy production and agriculture, where it is used as a bedding for animals, among other things.

### Objective of invention

The objective in accordance with the first aspect of the invention is to enable the manufacture of building board from pressed products made from sheet-like preforms that comprise support material and filler material by joining these together, and on the other hand to improve the strength characteristics of building boards manufactured in this way. The objective in accordance with the second aspect of the invention is to enable the joining of the pressed product made from sheet-like preforms that comprise support material and filler material to the building board.

The dependent claims describe the advantageous aspects of the invention.

### Advantages of invention

In the method for the manufacture of building board:
a) sheet-like preforms, which comprise support material and filler material, of which the support material contains natural fibre material, textile fibres, polyester and/or polypropylene and the filler material contains fibrous or fine-grained natural material, namely peat, pulp, hemp or coconut fibre,
   are compressed into a number of sheet-like pressed products, which have a density and thickness;
b) each sheet-like pressed product is pre-treated by applying contact adhesive on one side or both sides of each sheet-like pressed product, and the adhesive is allowed to harden completely or partially;
c) the pre-treated pressed products are placed against each other to form a layer structure so that those sheet-like pressed products onto which adhesive has been applied on both sides come to the inside of the layer structure and those sheet-like pressed products onto which adhesive has been applied on one side only are placed at the outer edges of the layer structure so that the side onto which adhesive has been applied points to the inside of the layer structure;
d) the layer structure is compressed at an elevated temperature, which is lower than the melting temperature of the support material, in order to accomplish a shock compression effect by compressing the layer structure 5 - 40% thinner than its original total thickness;
e) compression is reduced before the channelling of the adhesive -i.e. before the expansion of the pressed products and of the contact adhesive to the sides when the layer structure is compressed- and kept at an elevated temperature until the adhesive activates and forms an essentially solid bond from the layer structure, in which case the pressed products in the layer structure have essentially been fastened to each other forming the building board; and
f) compression is finished and the building board is allowed to cool.

By means of the method, it is possible to manufacture the building board so that the strength of the building board formed by joining together pressed products made from preforms that contain support material and filler material does not weaken while the characteristics of the support material remain essentially unchanged, unlike if the building board was assembled as a moulded and pressed product using the method described in the Finnish patent 122883, in other words while the support material is molten. By means of a temperature lower than the melting point of the support material, it is possible to avoid the collapse or caving in of the inner structure of individual pressed products.

On one hand, by means of the method it is possible to ensure specifically by means of shock compression that a sufficiently strong adhesive bonding is created over the entire surface between pressed products that have uneven surface. On the other hand, by reducing the compression intensity after shock compression, it is possible to avoid an increase in the surface area of the adhesive surfaces in the lateral direction at the location of the adhesive layers; otherwise, when the adhesive dries, it might force the pressed products to stay in an extended shape in the lateral direction. Moreover, by means of the method it is possible to make an adhesive bonding that endures a reduction in the lateral pressure when the compression finishes, in other words restoring from channelling does not tear open the adhesive bonding.

In the method for the coating of a sheet-like pressed product and/or for the implementation of a building board joint of a sheet-like pressed product:
- at least one sheet-like preform,
   which comprises support material and filler material, of which the support material contains natural fibre material, textile fibres, polyester and/or polypropylene and the filler material contains fibrous or fine-grained natural material, namely peat, pulp, hemp or coconut fibre,
   is compressed into a corresponding number of sheet-like pressed products, which have a density and thickness;
   - the sheet-like pressed product is pre-treated by applying contact adhesive on one side or both sides of the sheet-like pressed product, and the adhesive is allowed to harden completely or partially;
   - optionally the coating material and/or building board is pre-treated by applying contact adhesive on one side, and the adhesive is allowed to harden completely or partially;
   - the pre-treated pressed product is placed against at least one building board - such as specifically plywood board - and/or against at least one coating material - such as fabric - to form a layer structure so that the half/halves of the sheet-like pressed product onto which adhesive has/have been applied comes/come to the inside of the layer structure;
   - the layer structure is compressed at an elevated temperature, which is lower than the melting temperature of the support material, in order to accomplish a shock compression effect by compressing the layer structure 5 - 40% thinner than its original total thickness;
   - compression is reduced before the channelling of the adhesive -i.e. the expansion of the pressed products and of the contact adhesive to the sides when the layer structure is compressed- and the compression reduced in this way is continued at an elevated temperature until the adhesive activates and forms an essentially solid bond from the layer structure, in which case the pressed product in the layer structure has essentially become fastened to the coating material and/or to the building board, forming the building board joint of a coated sheet-like pressed product and/or sheet-like pressed product;
   - compression is finished and the building board joint of the coated sheet-like pressed product and/or sheet-like pressed product is allowed to cool.

The sheet-like pressed product coated in this way is much better suited for use for example in furniture or as a wall material than the original pressed product, especially if the pressed product used is a peat board, because by choosing the coating material suitably, it is possible to considerably raise the wear resistance and cleanability of the coated sheet-like surface as compared to the original peat board. On the other hand, the building board joint of the sheet-like pressed product, implemented by means of the method, enables the implementation of larger structures than by using the original pressed product, especially if the pressed product used is a peat board.

A completely other aspect is to implement vibration attenuation of some structure by means of the pressed product: in this case the pressed product - most preferably a peat board - is glued between building boards - such as plywood boards - by means of the method according to the invention.

When in the method the building board is allowed to set for the strengthening of the adhesive bonding before it is used as a building board, most preferably for at least about 24 hours, it is possible to increase the usage strength and strength of adhesive bonding of the building board.

In accordance with an advantageous aspect, the adhesive is latex-based adhesive, contact adhesive, water-dilutable contact adhesive, urea adhesive and/or heat-activated adhesive and/or adhesive that is elastic after drying. On one hand, the usage characteristics (one precondition in particular is that the activation temperature of the adhesive is lower than the melting temperature of the support material) of these adhesives are generally suited to the gluing of pressed products. On the other hand, after the elastic adhesive has dried, it is well suited to the joining of pressed products made from primarily fragile natural materials, especially containing peat, because due to the elasticity it is better possible to avoid the chaffing of natural materials during bending, in which case the adhesive layer would tend to be cut off.

In accordance with a particularly advantageous aspect, the adhesive is applied by spraying. Not only is it possible to apply the adhesive thinly, quickly and evenly by means of spraying, more importantly, when the aerosols of spraying or the droplet size of spraying have been selected to be such that essentially not so large adhesive droplets are created that they would be absorbed into the pressed product, it is possible to avoid the penetration of adhesive or the resination of the pressed product. This is important especially if the building board is to be used to suppress noise or as acoustics boards, because the penetration of adhesive or the resination of the pressed product has an effect on the acoustic characteristics of the building board. The penetration of adhesive or the resination of the pressed product also has an effect on the heat insulation ability, because resination may also indirectly cause a heat bridge. In addition to this or instead of this, in adhesive application by spraying it is possible to visually inspect that the adhesive has spread over the entire area to be glued while at the same time it is possible to keep the necessary amount of adhesive smaller than in brush application, roll application or other adhesive application method.

When in the method the compression used to accomplish the shock compression effect is implemented with a duration of less than six seconds, most advantageously with a duration of less than five seconds, in order to reduce pre-tensioning created in the adhesive surface and/or in order to avoid a position change in the layer structure, it is possible to reduce an increase in the surface area of the adhesive bonding and the resulting permanent contraction of the entire layer structure.

When in the method the compression used to accomplish the shock compression effect is implemented by compressing the layer structure 20 - 30% thinner than its original total thickness, it is possible to improve the contact and bonding of the adhesive surfaces that press against each other over the entire area of the adhesive surface, if the adhesive surfaces contained for example depressions.

When in the method the compression used to activate the adhesive is implemented by compressing the layer structure 5 - 15%, most advantageously approx. 10% thinner than its original total thickness; the duration of this compression is most preferably 7 - 18 minutes, most advantageously 10 - 15 minutes, it is possible to improve the adhesion of the adhesive and reduce the permanent contraction of the entire layer structure.

When in the method the sheet-like preforms are of or contain peat felts or other natural fibre pressed product and the elevated temperature is 65 - 120°C, most advantageously approx. 70°C, it is possible to improve the activation and adhesion of the adhesive as well as reduce the contraction of the entire pressed product and prevent the collapse or caving in of the internal structure of the pressed product.

The sheet-like pressed products used in the method have most advantageously been formed from a gauze-like support material and filler material and optionally also from adhesive by folding them and binding them into a mat-like felt and then compressing. The method enables the manufacture of a thicker building board than what would be possible by folding, especially if the binding/compressing takes place at a temperature that is at least the melting temperature of the gauze-like support material. If an attempt was made to form a thick structure from a folded material in this way, the structure of the fold would collapse before the structure would have become glued together.

The sheet-like pressed products have most advantageously been implemented as a board or as a moulded and pressed product. This enables the utilisation of existing manufacturing processes for the manufacture of sheet-like pressed products. In this way, it is possible to acquire the sheet-like pressed products as prefabricated products, in which case the method can be used for the manufacture of building board so that the production facility that manufactures the building board actually only implements stages b) - f) listed above if stage a) has been implemented at a production facility that manufactures the sheet-like pressed products.

When the building board has been manufactured using the method according to any one of the above claims, it is possible to improve the strength of adhesive bonding of the building board that has a layer structure.

When the building board has been arranged as a background of an archery target or as its part, it is possible to utilise the building board in a versatile manner.

### List of drawings

In what follows, the method for the manufacture of building board and the embodiments of the building board are presented in more detail by means of the exemplary applications shown in the enclosed drawings FIG 1 - 3. Of the drawings:
- FIG 1: shows a perspective view of the building board viewed from above from the side;
- FIG 2: shows detail II of the building board shown in FIG 1; and
- FIG 3: shows detail III of the building board shown in FIG 2.

The same reference numbers refer to the same technical characteristics in all drawings.

### Detailed description of the invention

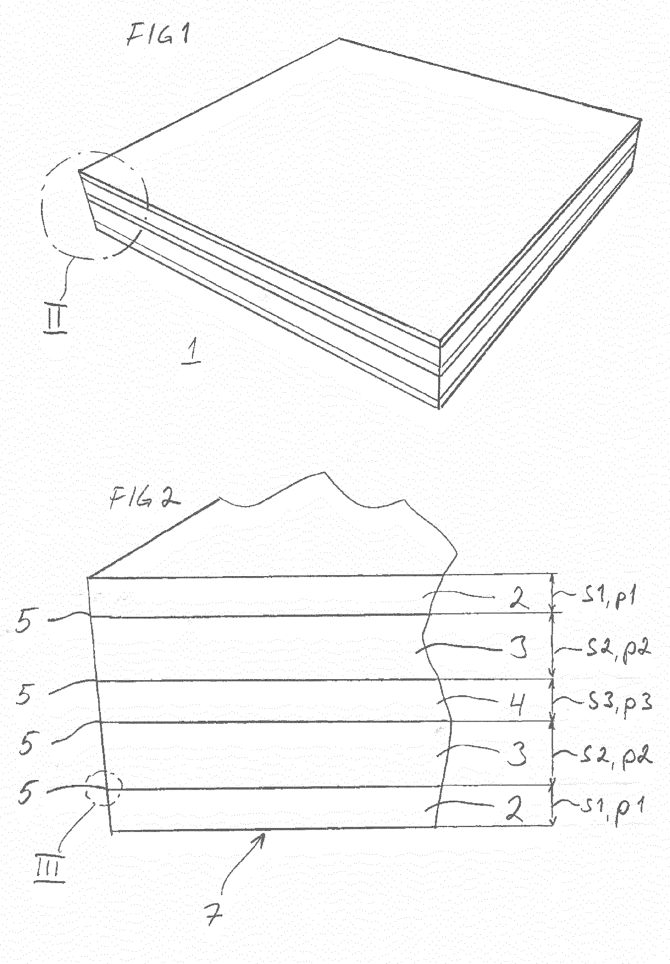

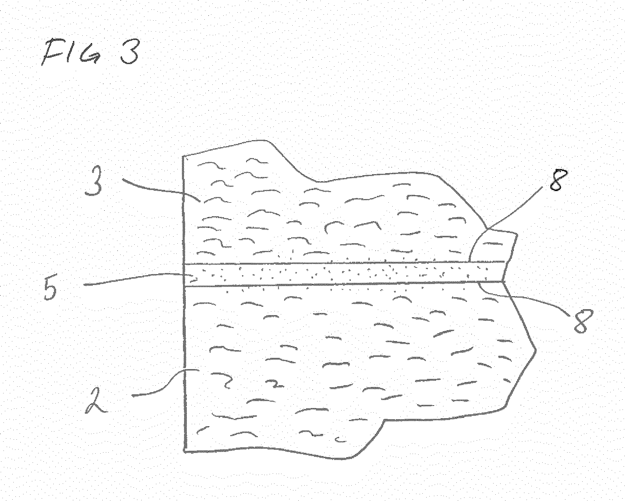

The drawing FIG 1 shows a building board 1, which has been manufactured using the method in accordance with the present invention, where:
**a)** sheet-like preforms, which comprise support material and filler material, of which the support material most advantageously contains natural fibre material, textile fibres, polyester and/or polypropylene and the filler material most advantageously contains fibrous or fine-grained natural material such as peat or pulp fibre
   are compressed into a number of sheet-like pressed products 2, 3, 4, which have a density ρ1, ρ2, ρ3 and thickness S1, S2, S3. The thickness S1, S2, S3 of the preform can be 5 - 100 mm (most advantageously the thicknesses are 10 - 60 mm). The density ρ1, ρ2, ρ3 of the preform can be 20 - 1000 kg/m³, most advantageously 50-300 kg/m³. The layer structure has been presented in more detail in FIG 2.
   The sheet-like pressed products 2, 3, 4 can be pressed products manufactured using the method described in Konto Oy's Finnish patent 122883, and the sheet-like pressed products 2, 3, 4 can have the characteristics described in said patent. Most advantageously a sheet or moulded and pressed product made from surface peat is used as the pressed products 2, 3, 4. A thicker structure is formed of the gauze-like support material and filler material by means of folding so that individual gauze parts settle over one another in layers. With regard to a more detailed description of the sheet-like pressed products 2, 3, 4, we refer to the Finnish patent 122883.
   The sheet-like pressed products 2, 3, 4 can be prefabricated.
**b)** each sheet-like pressed product 2, 3, 4 is pre-treated by applying contact adhesive 5 on one side or both sides of each sheet-like pressed product 2, 3, 4, and the adhesive 5 is allowed to harden completely or partially. It must be possible to allow the adhesive 5 to dry so that the surface of the adhesive 5 can be touched without the adhesive 5 sticking to fingers. The adhesive bonding has been presented in more detail in FIG 3. The sprayed adhesive 5 can be on the adhesive surface 8 of the pressed product 2, 3, 4 as a thin layer and it can travel into the pressed product 2, 3, 4 most advantageously less than 1 mm. The adhesive 5 is visible in the finished building board 1 most advantageously as a layer of less than 2 mm.
   Before the application of the contact adhesive 5, the selected sheet-like pressed products 2, 3, 4 are most preferably cleaned of loose dust and debris, for example by blowing with compressed air or by brushing.
   Before the application of the contact adhesive 5, the adhesive agent of the contact adhesive 5 is best mixed to a viscosity suited to spray application depending on the contact adhesive used so that the contact adhesive comes out of the selected nozzle as a thin mist without turning too much into droplets.
   The colour of the adhesive layer can be manipulated by toning the contact adhesive 5 or by using transparent contact adhesive 5. When gluing pre-painted pressed products, this is important in view of the level of finishing. In order to accomplish a sufficient aesthetical quality, it is therefore important to tone the contact adhesive 5 to have the same colour as the pre-painted pressed product, sufficiently close to the colour of the pre-painted pressed product, or to use transparent contact adhesive 5.
   Depending on the viscosity and type of the contact adhesive 5, a suitable nozzle size is selected for the spray. For example, a 1.8 mm nozzle is usually used with PU-based adhesives and a 1.6 mm nozzle for water-dilutable adhesives.
   The contact adhesive 5 is applied onto the board primarily by spraying in one or more layers onto all surfaces to be glued. One coat of application is primarily the goal, but with excessively absorbent materials the surface can be pre-closed by means of pretreatment by spraying a thin layer of contact adhesive 5, after which contact adhesive 5 is applied over it to serve as the actual adhesive surface.
   Spraying takes place in the manner of spray painting in four directions (from top down, from left to right), going over the entire surface twice.
   If no spray is available, contact adhesive 5 can also be applied by a brush or roll. However, this does not produce an equally even adhesive surface and may have an impact on durability, on the homogeneity of the pressed product, and on weight.
   Excessive use of contact adhesive 5 should be avoided so that for example in acoustic materials wet contact adhesive 5 does not absorb too deep into the material to be glued. Excessive absorption of adhesive also has an effect on heat conductivity and may cause heat bridges.
**c)** the pre-treated pressed products 2, 3, 4 are placed against each other to form a layer structure 7 so that those sheet-like pressed products 2, 3, 4 onto which adhesive 5 has been applied on both sides come to the inside of the layer structure 7 and those sheet-like pressed products 2, 3, 4 onto which adhesive 5 has been applied on one side only are placed at the outer edges of the layer structure 7 so that the side onto which adhesive 5 has been applied points to the inside of the layer structure 7.
   Depending on the type of contact adhesive 5, an open time specified by the manufacturer of the contact adhesive is waited before placing the adhesive surfaces against each, after which the adhesive surfaces are placed against each other. The adhesive surfaces should be placed against each other as accurately as possible in terms of their position.
   After this, the boards that are on top of each other are carried to a press, which has been pre-heated to the activation temperature required by the adhesive (for example with Fintex Oy's Tetrakryl 1163 adhesive this temperature is approx. 60 - 70°C). Both the top and bottom surfaces of the press used are usually heatable and both of them are used to accomplish an even heat.
   If the layer structure 7 comprises several sheet-like pressed products 2, 3, 4, for example four sheet-like pressed products, two sheet-like pressed products can be glued at a time to form a temporary layer structure, after which the temporary layer structure is combined into a single layer structure 7 by means of new compression. This ensures that the adhesive seams between thick layers hold.
**d)** the layer structure 7 is compressed at an elevated temperature, which is lower than the melting temperature of the support material, in order to accomplish a shock compression effect. In this case, it is possible for the adhesive surfaces 8 to bond to each other over the entire area of the adhesive surface 8.
   Before shock compression, the pressed products 2, 3, 4 of the layer structure 7 to be laminated are, however, most advantageously compressed lightly together in a press for the duration of pre-heating. This compression can be referred to as a "pre-tensioning state". The required amount of compression, in other words how much the boards are compressed, depends on the porosity of the pressed products used. Excessive compression must be avoided in order to avoid the channelling explained below.
   The layer structure 7 to be laminated, in other words a bundle of boards, is kept pre-tensioned for a period of time to be chosen depending on its thickness and heat conductivity so that the temperature of the adhesive surfaces (in other words the inner temperature of the resulting laminate) is as desired in all parts. The hold time can be tested in advance without contact adhesive 5 by placing a thermometer between the pressed products 2, 3, 4.
   The temperature is not raised to the level of the melting temperature of the pressed products 2, 3, 4 - specifically to that of the support material of the pressed products 2, 3, 4 - but the lamination takes place at a temperature lower than this. If the melting temperature of the support material is exceeded, the pressed products 2, 3, 4 collapse during compression.
   After the accomplishment of the pre-tensioning state, after the contact adhesive 5 has activated, so-called shock compression is performed, in which the layer structure 7 to be laminated is compressed suddenly together by pressing it for a moment approx. 5 - 40% thinner than its total thickness. The compression to be aimed at by shock compression depends on the porosity and resilience of the used materials of the pressed products. Shock compression usually lasts for a few seconds, after which the press is released almost open to the same "pre-tensioning state" as before. If necessary, shock compression can be repeated.
   As compared to continuous compression, the channelling of the contact adhesive 5 and pressed products 2, 3, 4 is avoided by shock compression, in other words that the expansion of the materials as a result of compression would remain a permanent state of the item. The matching of uneven surfaces together and a maximum adhesive surface area are ensured by shock compression.
**e)** compression is reduced before the channelling of the adhesive and the compression reduced in this way is continued at an elevated temperature until the adhesive 5 activates and forms an essentially solid bond from the layer structure 7, in which case the pressed products 2, 3, 4 in the layer structure 7 have essentially been fastened to each other forming the building board 1. Channelling in this context means the expansion of the pressed products 2, 3, 4 and of the adhesive bonding 5 to the sides when the layer structure 7 is compressed.
   The layer structure 7 is kept in the press at a desired temperature for the period of time specified by the manufacturer of the contact adhesive 5. In many cases just raising to the activation temperature of the adhesive momentarily is sufficient with shock compression.
**f)** compression is finished and the building board 1 is allowed to cool.
   When lamination in the press has taken place, the press is opened and the layer structure 7 is allowed to cool either in the press, or it is moved to a level to cool in such a position that no extra strain is exerted on it. The moving of a hot board should be avoided.
   A cooled board is ready for further processing.

The building board 1 is allowed to set for the strengthening of the adhesive bonding before it is used as a building board 1, most preferably for at least about 24 hours. During setting, the building board 1 can recover to its original thickness in which it was before shock compression.

The adhesive 5 is latex-based adhesive, contact adhesive, water-dilutable contact adhesive, urea adhesive or heat-activated adhesive. Water-dilutable contact adhesive Tetrakryl 1163 manufactured by Fintex-Tetrakem Oy has been used in the test boards. The adhesive 5 is applied most preferably by spraying.

The compression used to accomplish the shock compression effect is implemented with a duration of less than six seconds, most advantageously with a duration of less than five seconds, in order to reduce pre-tensioning created in the adhesive surface 8 and/or in order to avoid a position change in the layer structure 7. If the compression used to accomplish the shock compression effect is of a longer duration, the layer structure 7 and adhesive 5 are spread out in the lateral direction, whereby, when the adhesive 5 hardens, the layer structure 7 no longer returns to its original thickness due to the increased surface area of the adhesive 5. The compression used to accomplish the shock compression effect is implemented by compressing the layer structure 7 20 - 30% thinner than its original total thickness.

The compression used to activate the adhesive 5 is implemented by compressing the layer structure 7 5 - 15%, most advantageously essentially approx. 10% thinner than its original total thickness; the duration of this compression is most preferably 7 - 18 minutes, most advantageously 10 - 15 minutes. During this compression, the adhesive 5 re-activates and the adhesive surfaces 8 bond with each other.

The sheet-like preforms are of or contain peat felts or other natural fibre pressed product and the elevated temperature is 65 - 120°C, most advantageously approx. 70°C. At this temperature, the filler material does not yet begin to melt and contract. The building board may be arranged as a i) background of an archery target or as its part, ii) door or as its part, iii) wall or as its part, most advantageously as a separating wall, IV) piece of furniture or as its part, V) mattress or as its part, or VI) padding or as its part. The archery target has been tested with various bows. An arrow did not pierce the target when the archery target was shot at using a traditional bow (pull force of bow less than 27,22 kg (60 pounds) and initial velocity of arrow 45,72 - 60,96 m/s (150 - 200 feet/s)). A compound bow pierces the target 25-40 cm measured from the front surface of the target to the tip of the arrow (pull force 27,22 - 36,29 kg (60 - 80 pounds) and initial velocity of arrow 9,75 - 106,68 m/s (32 - 350 feet/s)). The weight of the arrows was 200 - 600 grains, in other words approx. 13 - 40 g.

As an alternative to pressed boards made from surface peat and bought by us from Konto Oy ("peat boards"), in the method we have experimented with industrial felts (manufactured from artificial materials and natural materials), fabrics, flax boards and hemp boards. The inventor has managed to make the invention work with all of these. The inventor assumes that the method might also work with coconut fibres and other fibres.

An oven and a negative pressure (vacuum) can be used instead of a press. The drawback of using negative pressure is that when air is sucked out of a vacuum pack, the temperature of the layer structure 7 decreases a little and it is not always possible to achieve linear pressing in a vacuum in the direction of the entire horizontal surface area. Moreover, the use of a vacuum pack is more uneconomical than the use of a press.

Ceramic coating has currently been used for the coating of the press in order to avoid potential adhesive rinning.

In the method for the coating of a sheet-like pressed product and/or for the implementation of the building board joint of a sheet-like pressed product:
- at least one sheet-like preform,
   which comprises support material and filler material, of which the support material most advantageously contains natural fibre material, textile fibres, polyester and/or polypropylene and the filler material most advantageously contains fibrous or fine-grained natural material such as peat or pulp fibre,
   is compressed into a corresponding number of sheet-like pressed products (2, 3, 4), which have a density (ρ1, ρ2, ρ3) and thickness (S1, S2, S3) - this stage can be implemented at a different production facility, as described above -;
- the sheet-like pressed product (2, 3, 4) is pre-treated by applying contact adhesive (5) on one side or both sides of the sheet-like pressed product (2, 3, 4), and the adhesive (5) is allowed to harden completely or partially;
- optionally the coating material and/or building board is pre-treated by applying contact adhesive (5) on one side, and the adhesive (5) is allowed to harden completely or partially;
- the pre-treated pressed product (2, 3, 4) is placed against at least one building board - such as specifically plywood board - and/or against at least one coating material - such as fabric - to form a layer structure (7) so that the half/halves of the sheet-like pressed product (2, 3, 4) onto which adhesive (5) has/have been applied comes/come to the inside of the layer structure (7);
- the layer structure (7) is compressed at an elevated temperature, which is lower than the melting temperature of the support material, in order to accomplish a shock compression effect;
- compression is reduced before the channelling of the adhesive and the compression reduced in this way is continued at an elevated temperature until the adhesive (5) activates and forms an essentially solid bond from the layer structure (7), in which case the pressed product (2, 3, 4) in the layer structure (7) has essentially become fastened to the coating material and/or to the building board, forming the building board joint of a coated sheet-like pressed product and/or sheet-like pressed product;
- compression is finished and the building board joint of the coated sheet-like pressed product and/or sheet-like pressed product is allowed to cool.

### List of reference numbers used:

- S1: thickness
- S2: thickness
- S3: thickness
- ρ1: density
- ρ2: density
- ρ3: density
- 1: building board
- 2: pressed product
- 3: pressed product
- 4: pressed product
- 5: (contact) adhesive
- 7: layer structure
- 8: adhesive surface

## Claims

1. A method for the manufacture of a building board (1), wherein:
- sheet-like preforms, which comprise support material and filler material, of which the support material contains natural fibre material, textile fibres, polyester and/or polypropylene and the filler material contains fibrous or fine-grained natural material, namely peat, pulp, hemp or coconut fibre,
are compressed into a number of sheet-like pressed products (2, 3, 4), which have a density (ρ1, ρ2, ρ3) and thickness (S1, S2, S3);
- each sheet-like pressed product (2, 3, 4) is pre-treated by applying contact adhesive (5) on one side or both sides of each sheet-like pressed product (2, 3, 4), and the adhesive (5) is allowed to harden completely or partially;
- the pre-treated pressed products (2, 3, 4) are placed against each other to form a layer structure (7) so that those sheet-like pressed products (2, 3, 4) onto which adhesive (5) has been applied on both sides come to the inside of the layer structure (7) and those sheet-like pressed products (2, 3, 4) onto which adhesive (5) has been applied on one side only are placed at the outer edges of the layer structure (7) so that the side onto which adhesive (5) has been applied points to the inside of the layer structure (7);
- the layer structure (7) is compressed at an elevated temperature, which is lower than the melting temperature of the support material, in order to accomplish a shock compression effect by compressing the layer structure (7) 5 - 40% thinner than its original total thickness;
- compression is reduced before the channelling of the adhesive -i.e. before the expansion of the pressed products (2, 3, 4) and of the contact adhesive (5) to the sides when the layer structure (7) is compressed- and the compression reduced in this way is continued at an elevated temperature until the adhesive (5) activates and forms an essentially solid bond from the layer structure (7), in which case the pressed products (2, 3, 4) in the layer structure (7) have essentially been fastened to each other forming the building board (1);
- compression is finished and the building board (1) is allowed to cool.

2. A method for the coating of a sheet-like pressed product and/or for the implementation of a building board joint of a sheet-like pressed product, wherein:
- at least one sheet-like preform,
which comprises support material and filler material, of which the support material contains natural fibre material, textile fibres, polyester and/or polypropylene and the filler material contains fibrous or fine-grained natural material, namely peat, pulp, hemp or coconut fibre,
is compressed into a corresponding number of sheet-like pressed products (2, 3, 4), which have a density (ρ1, ρ2, ρ3) and thickness (S1, S2, S3);
- the sheet-like pressed product (2, 3, 4) is pre-treated by applying contact adhesive (5) on one side or both sides of the sheet-like pressed product (2, 3, 4), and the adhesive (5) is allowed to harden completely or partially;
- optionally the coating material and/or building board is pre-treated by applying contact adhesive (5) on one side, and the adhesive (5) is allowed to harden completely or partially;
- the pre-treated pressed product (2, 3, 4) is placed against at least one building board - such as specifically plywood board - and/or against at least one coating material - such as fabric - to form a layer structure (7) so that the half/halves of the sheet-like pressed product (2, 3, 4) onto which adhesive (5) has/have been applied comes/come to the inside of the layer structure (7);
- the layer structure (7) is compressed at an elevated temperature, which is lower than the melting temperature of the support material, in order to accomplish a shock compression effect by compressing the layer structure (7) 5 - 40% thinner than its original total thickness;
- compression is reduced before the channelling of the adhesive -i.e. the expansion of the pressed products (2, 3, 4) and of the contact adhesive (5) to the sides when the layer structure (7) is compressed- and the compression reduced in this way is continued at an elevated temperature until the adhesive (5) activates and forms an essentially solid bond from the layer structure (7), in which case the pressed product (2, 3, 4) in the layer structure (7) has essentially become fastened to the coating material and/or to the building board, forming the building board joint of a coated sheet-like pressed product and/or sheet-like pressed product;
- compression is finished and the building board joint of the coated sheet-like pressed product and/or sheet-like pressed product is allowed to cool.

3. A method according to claim 1 or 2, where the building board joint of the building board (1), coated sheet-like pressed product and/or sheet-like pressed product is allowed to set for the strengthening of the adhesive bonding before it is used as a building board (1), most preferably for at least about 24 hours.

4. A method according to any one of the preceding claims, where the adhesive (5) is latex-based adhesive, contact adhesive, water-dilutable contact adhesive, urea adhesive and/or heat-activated adhesive and/or adhesive that is elastic after drying.

5. A method according to claim 4, where the adhesive (5) is applied by spraying.

6. A method according to any one of the preceding claims, where the compression used to accomplish the shock compression effect is implemented with a duration of less than six seconds, most advantageously with a duration of less than five seconds, in order to reduce pre-tensioning created in the adhesive surface and/or in order to avoid a position change in the layer structure.

7. A method according to any one of the preceding claims, where the compression used to accomplish the shock compression effect is implemented by compressing the layer structure (7) 20 - 30% thinner than its original total thickness.

8. A method according to any one of the preceding claims 1 to 6, where the compression used to activate the adhesive (5) is implemented by compressing the layer structure (7) 5 - 15%, most advantageously 10% thinner than its original total thickness; the duration of this compression is most preferably 7 - 18 minutes, most advantageously 10 - 15 minutes.

9. A method according to any one of the preceding claims, where the sheet-like preforms are of or contain peat felts or other natural fibre pressed product and the elevated temperature is 65 - 120°C, most advantageously 70°C.

10. A method according to any one of the preceding claims, where the sheet-like pressed products (2, 3, 4) have been formed from a gauze-like support material and filler material and optionally also from adhesive by folding them and binding them into a mat-like felt and then compressing.

11. A method according to any one of the preceding claims, where the sheet-like pressed products (2, 3, 4) have been implemented - most advantageously as prefabricated products - as a board or moulded and pressed product.

## Patentansprüche

1. Verfahren zum Herstellen einer Bauplatte (1), wobei:
- bahnartige Vorformlinge, die Stützmaterial und Füllstoffmaterial umfassen, wobei das Stützmaterial Naturfasermaterial, Textilfasern, Polyester und/oder Polypropylen enthält und das Füllstoffmaterial faserhaltiges oder feinkörniges Naturmaterial, nämlich Torf-, Pulpe-, Hanf- oder Kokosnussfaser, enthält, zu einer Anzahl von bahnartigen Pressprodukten (2, 3, 4) zusammengepresst werden, die eine Dichte (ρ1, ρ2, ρ3) und Stärke (S1, S2, S3) aufweisen;
- jedes bahnartige Pressprodukt (2, 3, 4) durch Aufbringen von Kontakthaftstoff (5) auf eine Seite oder beide Seiten von jedem bahnartigen Pressprodukt (2, 3, 4) vorbehandelt wird und ermöglicht wird, dass der Haftstoff (5) vollständig oder teilweise aushärtet;
- die vorbehandelten Pressprodukte (2, 3, 4) zum Ausbilden einer Schichtstruktur (7) derart aneinander angeordnet werden, dass jene bahnartigen Pressprodukte (2, 3, 4), auf welche Haftstoff (5) auf beiden Seiten aufgebracht wurde, auf die Innenseite der Schichtstruktur (7) kommen, und jene bahnartigen Pressprodukte (2, 3, 4), auf die Haftstoff (5) nur auf einer Seite aufgebracht wurde, derart an den Außenkanten der Schichtstruktur (7) angeordnet werden, dass die Seite, auf die Haftstoff (5) aufgebracht wurde, zur Innenseite der Schichtstruktur (7) deutet;
- die Schichtstruktur (7) auf einer erhöhten Temperatur, die niedriger als die Schmelztemperatur des Stützmaterials ist, zusammengepresst wird, um eine Stoßwellenkompressionswirkung durch Zusammenpressen der Schichtstruktur (7) auf 5 bis 40% dünner als ihre ursprüngliche Gesamtstärke zu erzielen;
- die Kompression vor dem Kanalisieren des Haftstoffs - d.h. vor der Ausdehnung der Pressprodukte (2, 3, 4) und des Kontakthaftstoffs (5) zu den Seiten, wenn die Schichtstruktur (7) zusammengepresst wird - verringert wird und die derart verringerte Kompression auf einer erhöhten Temperatur fortgesetzt wird, bis sich der Haftstoff (5) aktiviert und eine im Wesentlichen feste Bindung aus der Schichtstruktur (7) ausbildet, in welchem Falle die Pressprodukte (2, 3, 4) in der Schichtstruktur (7) im Wesentlichen aneinander befestigt wurden und die Bauplatte (1) ausbilden;
- die Kompression abgeschlossen wird und ermöglicht wird, dass die Bauplatte (1) abkühlt.

2. Verfahren zum Beschichten eines bahnartigen Pressprodukts und/oder zur Implementierung einer Bauplattenverbindungsstelle eines bahnartigen Pressprodukts, wobei:
- zumindest ein Vorformling, der Stützmaterial und Füllstoffmaterial umfasst, wobei das Stützmaterial Naturfasermaterial, Textilfasern, Polyester und/oder Polypropylen enthält und das Füllstoffmaterial faserhaltiges oder feinkörniges Naturmaterial, nämlich Torf-, Pulpe-, Hanf- oder Kokosnussfaser, enthält, zu einer entsprechenden Anzahl von bahnartigen Pressprodukten (2, 3, 4) zusammengepresst wird, die eine Dichte (ρ1, ρ2, ρ3) und Stärke (S1, S2, S3) aufweisen;
- das bahnartige Pressprodukt (2, 3, 4) durch Aufbringen von Kontakthaftstoff (5) auf eine Seite oder beide Seiten des bahnartigen Pressprodukts (2, 3, 4) vorbehandelt wird und ermöglicht wird, dass der Haftstoff (5) vollständig oder teilweise aushärtet;
- das Beschichtungsmaterial und/oder die Bauplatte optional durch Aufbringen von Kontakthaftstoff (5) auf einer Seite vorbehandelt wird und ermöglicht wird, dass der Haftstoff (5) vollständig oder teilweise aushärtet;
- das vorbehandelte Pressprodukt (2, 3, 4) zum Ausbilden einer Schichtstruktur (7) derart an zumindest einer Bauplatte - wie etwa insbesondere einer Sperrholzplatte - und/oder an zumindest einem Beschichtungsmaterial - wie etwa Stoff - angeordnet wird, dass die Hälfte/Hälften des bahnartigen Pressprodukts (2, 3, 4), auf die Haftstoff (5) aufgebracht wurde, auf die Innenseite der Schichtstruktur (7) kommt/kommen;
- die Schichtstruktur (7) auf einer erhöhten Temperatur, die niedriger als die Schmelztemperatur des Stützmaterials ist, zusammengepresst wird, um eine Stoßwellenkompressionswirkung durch Zusammenpressen der Schichtstruktur (7) auf 5 bis 40% dünner als ihre ursprüngliche Gesamtstärke zu erzielen;
- die Kompression vor dem Kanalisieren des Haftstoffs - d.h. vor der Ausdehnung der Pressprodukte (2, 3, 4) und des Kontakthaftstoffs (5) zu den Seiten, wenn die Schichtstruktur (7) zusammengepresst wird - verringert wird und die derart verringerte Kompression auf einer erhöhten Temperatur fortgesetzt wird, bis sich der Haftstoff (5) aktiviert und eine im Wesentlichen feste Bindung aus der Schichtstruktur (7) ausbildet, in welchem Falle das Pressprodukt (2, 3, 4) in der Schichtstruktur (7) im Wesentlichen am Beschichtungsmaterial und/oder an der Bauplatte befestigt wurde und die Bauplattenverbindungsstelle eines beschichteten bahnartigen Pressprodukts und/oder bahnartigen Pressprodukts ausbildet;
- die Kompression abgeschlossen wird und ermöglicht wird, dass die Bauplattenverbindungsstelle des beschichteten bahnartigen Pressprodukts und/oder bahnartigen Pressprodukts abkühlt.

3. Verfahren nach Anspruch 1 oder 2, wobei ermöglicht wird, dass sich die Bauplattenverbindungsstelle der Bauplatte (1), des beschichteten bahnartigen Pressprodukts und/oder bahnartigen Pressprodukts zur Stärkung der Haftbindung setzt, bevor sie als Bauplatte (1) benutzt wird, vorzugsweise für zumindest 24 Stunden.

4. Verfahren nach einem der vorhergehenden Ansprüche, wobei der Haftstoff (5) latexbasierter Haftstoff, Kontakthaftstoff, wasserlöslicher Kontakthaftstoff, Harnstoffhaftstoff und/oder wärmeaktivierter Haftstoff und/oder Haftstoff ist, der nach dem Trocknen elastisch ist.

5. Verfahren nach Anspruch 4, wobei der Haftstoff (5) durch Sprühen aufgebracht wird.

6. Verfahren nach einem der vorhergehenden Ansprüche, wobei die Kompression, die zum Erzielen der Stoßwellenkompressionswirkung benutzt wird, mit einer Dauer von weniger als sechs Sekunden, am günstigsten mit einer Dauer von weniger als fünf Sekunden, implementiert wird, um in der Haftstoffoberfläche erzeugtes Vorspannen zu verringern, und/oder um eine Positionsänderung in der Schichtstruktur zu vermeiden.

7. Verfahren nach einem der vorhergehenden Ansprüche, wobei die Kompression, die zum Erzielen der Stoßwellenkompressionswirkung benutzt wird, durch Zusammenpressen der Schichtstruktur (7) auf 20 bis 30% dünner als ihre ursprüngliche Gesamtstärke implementiert wird.

8. Verfahren nach einem der vorhergehenden Ansprüche 1 bis 6, wobei die Kompression, die zum Aktivieren des Haftstoffs (5) benutzt wird, durch Zusammenpressen der Schichtstruktur (7) auf 5 bis 15%, am günstigsten auf 10% dünner als ihre ursprüngliche Gesamtstärke implementiert wird; wobei die Dauer dieser Kompression am meisten bevorzugt 7 bis 8 Minuten, am günstigsten 10 bis 15 Minuten beträgt.

9. Verfahren nach einem der vorhergehenden Ansprüche, wobei die bahnartigen Vorformlinge aus Torffilzen oder anderen Naturfaserpressprodukten sind oder diese beinhalten, und wobei die erhöhte Temperatur 65 bis 120 °C, am günstigsten 70 °C beträgt.

10. Verfahren nach einem der vorhergehenden Ansprüche, wobei die bahnartigen Pressprodukte (2, 3, 4) aus einem gazeartigen Stützmaterial und Füllstoffmaterial ausgebildet wurden, und optional außerdem aus Haftstoff, durch Falzen derselben und Binden derselben zu einem mattenartigen Filz und nachfolgendes Zusammenpressen.

11. Verfahren nach einem der vorhergehenden Ansprüche, wobei die bahnartigen Pressprodukte (2, 3, 4) - am günstigsten als vorgefertigte Produkte - als Platte oder Form- und Pressprodukt implementiert wurden.

## Revendications

1. Procédé de fabrication d'un panneau de construction (1), dans lequel :
- des préformes en forme de feuille, qui comprennent un matériau de support et un matériau de remplissage, ledit matériau de support contenant un matériau à base de fibres naturelles, de fibres textiles, de polyester et/ou de polypropylène et ledit matériau de remplissage contenant un matériau naturel fibreux ou à grain fin, à savoir tourbe, pâte, chanvre ou fibre de noix de coco, sont comprimées pour former plusieurs produits pressés en forme de feuille (2, 3, 4) présentant une densité (p1, p2, p3) et une épaisseur (S1, S2, S3) ;
- chaque produit pressé en forme de feuille (2, 3, 4) est prétraité par application de colle de contact (5) sur l'un ou les deux côtés de chaque produit pressé en forme de feuille (2, 3, 4), ladite colle (5) étant durcie complètement ou en partie ;
- les produits pressés prétraités (2, 3, 4) sont placés l'un contre l'autre pour former une structure stratifiée (7) de sorte que les produits pressés en forme de feuille (2, 3, 4) sur lesquels la colle (5) a été appliquée des deux côtés sont placés à l'intérieur de la structure stratifiée (7) et que les produits pressés en forme de feuille (2, 3, 4) sur lesquels la colle (5) a été appliquée sur un seul côté sont placés de sorte que le côté où se trouve la colle (5) est tourné vers l'intérieur de la structure stratifiée (7) ;
- la structure stratifiée (7) est comprimée à une température élevée inférieure à la température de fusion du matériau de support afin de produire un effet de compression par choc en comprimant la structure stratifiée (7) pour qu'elle soit 5 à 40 % plus fine que son épaisseur totale initiale ;
- la compression est réduite avant que la colle ne soit canalisée - c'est-à-dire avant l'expansion des produits pressés (2, 3, 4) et de la colle de contact (5) sur les côtés au moment de la compression de la structure stratifiée (7) - et la compression ainsi réduite est poursuivie à une température élevée jusqu'à ce que la colle (5) prenne et forme une adhérence essentiellement solide dans la structure stratifiée (7), les produits pressés (2, 3, 4) de ladite structure stratifiée (7) ayant ainsi été essentiellement fixés l'un à l'autre pour former le panneau de construction (1) ;
- la compression est terminée et le panneau de construction (1) est laissé à refroidir.

2. Procédé de revêtement d'un produit pressé en forme de feuille et/ou de réalisation d'un joint de panneau de construction d'un produit pressé en forme de feuille, dans lequel :
- au moins une préforme en forme de feuille,
qui comprend un matériau de support et un matériau de remplissage, ledit matériau de support contenant un matériau à base de fibres naturelles, de fibres textiles, de polyester et/ou de polypropylène et ledit matériau de remplissage contenant un matériau naturel fibreux ou à grain fin, à savoir tourbe, pâte, chanvre ou fibre de noix de coco,
est comprimée pour former plusieurs produits pressés en forme de feuille (2, 3, 4) présentant une densité (p1, p2, p3) et une épaisseur (S1, S2, S3) ;
- le produit pressé en forme de feuille (2, 3, 4) est prétraité par application de colle de contact (5) sur l'un ou les deux côtés dudit produit pressé en forme de feuille (2, 3, 4), ladite colle (5) étant durcie complètement ou en partie ;
- le matériau de revêtement et/ou le panneau de construction sont éventuellement prétraités par application de colle de contact (5) sur un côté, ladite colle (5) étant durcie complètement ou en partie ;
- le produit pressé prétraité (2, 3, 4) est placé contre au moins un panneau de construction - tel qu'un panneau de contreplaqué - et/ou au moins un matériau de revêtement - tel qu'un tissu - pour former une structure stratifiée (7) de sorte que la moitié du ou des produits pressés en forme de feuille (2, 3, 4) sur lequel ou lesquels la colle (5) a été appliquée est/sont placé(s) à l'intérieur de la structure stratifiée (7) ;
- la structure stratifiée (7) est comprimée à une température élevée inférieure à la température de fusion du matériau de support afin de produire un effet de compression par choc en comprimant la structure stratifiée (7) pour qu'elle soit 5 à 40 % plus fine que son épaisseur totale initiale ;
- la compression est réduite avant que la colle ne soit canalisée - c'est-à-dire avant l'expansion des produits pressés (2, 3, 4) et de la colle de contact (5) sur les côtés au moment de la compression de la structure stratifiée (7) - et la compression ainsi réduite est poursuivie à une température élevée jusqu'à ce que la colle (5) prenne et forme une adhérence essentiellement solide dans la structure stratifiée (7), les produits pressés (2, 3, 4) de ladite structure stratifiée (7) ayant ainsi été essentiellement fixés au matériau de revêtement et/ou au panneau de construction, pour former le joint de panneau de construction d'un produit pressé enduit en forme de feuille et/ou un produit pressé en forme de feuille ;
- la compression est terminée et le joint de panneau de construction du produit pressé enduit en forme de feuille et/ou du produit pressé en forme de feuille est laissé à refroidir.

3. Procédé selon la revendication 1 ou la revendication 2, dans lequel le joint de panneau de construction du panneau de construction (1), du produit pressé enduit en forme de feuille et/ou du produit pressé en forme de feuille est durci afin de renforcer l'adhérence de la colle avant son utilisation comme panneau de construction (1), de préférence pendant au moins 24 heures environ.

4. Procédé selon l'une quelconque des revendications précédentes, dans lequel la colle (5) est une colle à base de latex, une colle de contact, une colle de contact diluable à l'eau, une colle à base d'urée et/ou une colle thermoactivée et/ou une colle élastique après séchage.

5. Procédé selon la revendication 4, dans lequel la colle (5) est appliquée par pulvérisation.

6. Procédé selon l'une quelconque des revendications précédentes, dans lequel la compression utilisée afin de produire un effet de compression par choc est réalisée en moins de six secondes, de préférence en moins de cinq secondes, pour réduire la prétension créée dans la surface adhésive et/ou pour éviter un changement de position dans la structure stratifiée.

7. Procédé selon l'une quelconque des revendications précédentes, dans lequel la compression utilisée afin de produire un effet de compression par choc est réalisée en comprimant la structure stratifiée (7) pour qu'elle soit 20-30 % plus fine que son épaisseur totale initiale.

8. Procédé selon l'une quelconque des revendications 1 à 6, dans lequel la compression utilisée pour activer la colle (5) est réalisée par compression de la structure stratifiée (7) pour qu'elle soit 5-15 % plus fine que son épaisseur totale initiale, de préférence 10 % plus fine que son épaisseur totale initiale, la durée de la compression étant comprise entre 7 et 18 minutes, de préférence entre 10 et 15 minutes.

9. Procédé selon l'une quelconque des revendications précédentes, dans lequel les préformes en forme de feuille comprennent ou sont composées de feutres de tourbe ou d'un autre produit pressé en fibre naturelle et sont portées à une température élevée comprise entre 65 et 120°C, de préférence 70°C.

10. Procédé selon l'une quelconque des revendications précédentes, dans lequel les produits pressés en forme de feuille (2, 3, 4) sont réalisés à partir d'un matériau de support en gaze et d'un matériau de remplissage, et éventuellement d'une colle, qui ont été pliés puis reliés pour former un feutre en forme de natte avant d'être comprimés.

11. Procédé selon l'une quelconque des revendications précédentes, dans lequel les produits pressés en forme de feuille (2, 3, 4) ont été réalisés, de préférence sous forme de produits préfabriqués, pour former un panneau ou un produit moulé et pressé.
